# EUROPÄISCHE PATENTSCHRIFT

(11) **EP 2 122 204 B1**
(45) Veröffentlichungstag und Bekanntmachung des Hinweises auf die Patenterteilung: **29.12.2010**
(21) Anmeldenummer: 08708859.7
(22) Anmeldetag: 11.02.2008
(51) Int. Cl.: F16H 61/24, F16H 59/10, G05G 5/06, F16H 63/38, F16H 59/08, F16H 59/50, F16H 63/48

(54) **ELEKTRISCHE SCHALTEINRICHTUNG FÜR EIN KRAFTFAHRZEUG**
ELECTRIC SHIFTING DEVICE FOR A MOTOR VEHICLE
DISPOSITIF DE COMMUTATION ÉLECTRIQUE POUR UN VÉHICULE À MOTEUR

(30) Priorität: 13.02.2007 DE 102007007667
(43) Veröffentlichungstag der Anmeldung: 25.11.2009
(73) Patentinhaber: Leopold Kostal GmbH & Co. KG, 58513 Lüdenscheid (DE)
(72) Erfinder: ABEL, Thomas, 58515 Lüdenscheid (DE); BLÄSING, Frank, 59457 Werl (DE); BLECKMANN, Michael, 58239 Schwerte-ergste (DE); BÖBEL, Ralf, 59439 Holzwickede (DE); BUNSELMEIER, Dirk, 58540 Meinerzhagen (DE); BÜHLMANN, Rainer, 59439 Holzwickede (DE); DEITMERG, Martin, 58507 Lüdenscheid (DE); HIRSCHFELD, Klaus, 58515 Lüdenscheid (DE); KUNZE, Martin, 44867 Bochum (DE); LUKSCH, Thomas, 58579 Schalksmühle (DE); MANS, Björn, 44309 Dortmund (DE); MOLKOW, Peter, 44265 Dortmund (DE); MOLDENHAUER, Knut, 58097 Hagen (DE); WINKELMANN, Ralf, 46359 Heiden (DE)
(74) Vertreter: Kerkmann, Detlef
(86) Internationale Anmeldenummer: PCT/EP2008/051604
(87) Internationale Veröffentlichungsnummer: WO 2008/098895

(56) Entgegenhaltungen:
- EP-A- 1 262 689
- EP-A- 1 283 386
- DE-A1- 10 005 328
- DE-U1-202006 006 763
- FR-A- 2 796 116
- US-A- 5 540 114

## Beschreibung

Die Erfindung betrifft eine elektrische Schalteinrichtung für ein Kraftfahrzeug, mit einem Schalthebel und mit einer zumindest eine erste Schaltgasse aufweisenden Schaltbegrenzungskulisse, wobei der Schalthebel um eine senkrecht zu der Schaltgasse verlaufende Achse drehbar gelagert und in der Schaltgasse in verschiedene Schaltstellungen bringbar ist.

Derartige Schalteinrichtungen werden bei Kraftfahrzeugen eingesetzt, die mit einem automatisierten Schaltgetriebe ausgerüstet sind. Dabei wird der eigentliche Schaltvorgang elektrohydraulisch oder elektromotorisch vorgenommen, während der jeweilige Schaltwunsch des Fahrers elektrisch oder elektronisch erfasst wird. Dem Fahrer stehen bei einem solchen automatisierten Schaltgetriebe die elektrische Schalteinrichtung mit einem Schalthebel und gegebenenfalls zusätzlichen, etwa am Lenkrad angeordneten Wippschaltern zum Herauf- und Herunterschalten zur Verfügung.

Der Schalthebel einer solchen Schalteinrichtung kann multistabil oder auch monostabil ausgeführt sein, dass heißt er kann entweder in mehrere feste Positionen einstellbar sein oder er besitzt, ähnlich einem Joystick nur eine stabile Ruheposition, in die der Schalthebel aus mehreren instabilen Stellpositionen immer wieder zurückfällt.

Die Schaltbegrenzungskulisse dient dabei der Führung des Schalthebels und der Begrenzung seiner Bewegung auf eine oder zwei parallel zueinander verlaufende Schaltgassen, wobei der Schalthebel im Falle zweier Schaltgassen zum Wechsel zwischen den beiden Schaltgassen längs eines diese verbindenden und senkrecht zu ihrem Verlauf ausgerichteten Verbindungskanals verstellt wird.

Der Schalthebel ist bei der DE 102 06 985 A1 monostabil nach Art eines Joystick ausgelegt, d.h. er ist um zwei zueinander senkrechte Achsen verschwenkbar, und dadurch in zwei zueinander parallelen Schaltgassen bewegbar, wobei er nach Wegfall der Betätigungskraft jeweils wieder in ein und dieselbe Grundstellung zurückfällt.

Die elektrische Schalteinrichtung gemäß der vorliegenden Erfindung zeichnet sich gegenüber dieser vorbekannten Einrichtung dadurch aus, dass das untere Ende des Schalthebels mit einer einen federbelasteten Raststößel sowie eine mit diesem kooperierende, mit einer parallel zueinander verlaufende erste und zweite Rastkurvenbahnen aufweisenden Rastkontur umfassenden Rasteinrichtung verbunden ist, wobei durch die erste Rastkurvenbahn rastende und/oder tastende Schaltstellungen des Schalthebels definiert sind, und die Rastkontur insgesamt durch einen Aktuator quer zu der Schaltgasse verschiebbar ist.

Durch die EP 1262689 A1 ist eine Schalteinrichtung gemäß dem Oberbegriff des Patentanspruchs 1 bekannt geworden

Die zweite Rastkurvenbahn der Rastkontur ist vorzugsweise so beschaffen, dass sie einen eine Rückstellung des Schalthebels in eine Grundstellung oder eine Sperrung des Schalthebels in bestimmten Schaltstellungen bewirkenden Verlauf hat.

Eine Schalteinrichtung mit erweiterten Schaltmöglichkeiten ergibt sich dadurch, dass in der Schaltbegrenzungskulisse eine parallel zu der ersten Schaltgasse verlaufende zweite Schaltgasse sowie ein senkrecht zum Verlauf der Schaltgassen ausgerichteter Verbindungskanal vorhanden sind, und dass die Rastkontur eine parallel zu den ersten und zweiten Rastkurvenbahnen verlaufende weitere Rastkurvenbahn aufweist, durch welche rastende und/oder tastende Schaltstellungen des Schalthebels definiert sind.

In der letzteren Ausführung kann der Schalthebel zweckmäßigerweise in Richtung des Verbindungskanals verschiebbar gelagert sein, und zwar in der Art und Weise, dass die Lagerung des Schalthebels in eine Linearlagerung und eine Drehlagerung unterteilt ist, wobei die Linearlagerung bevorzugt durch zwei Säulenachsen erfolgt, welche gemeinsam um eine weitere Achse drehbar gelagert sind.

Weitere vorteilhafte Ausgestaltungen und Weiterbildungen der erfindungsgemäßen Schalteinrichtung werden anhand des in der Zeichnung dargestellten, bevorzugten Ausführungsbeispiels erläutert.

Es zeigen:
- Figur 1: einen Längsschnitt durch die erste Schaltgasse mit dem darin befindlichen Schalthebel
- Figur 2: eine schematische Darstellung der Rastkontur mit der darüberliegenden Schaltbegrenzungskulisse a) in der Grundstellung b) in der verschobenen Stellung
- Figur 3: die Lagerung des Schalthebels

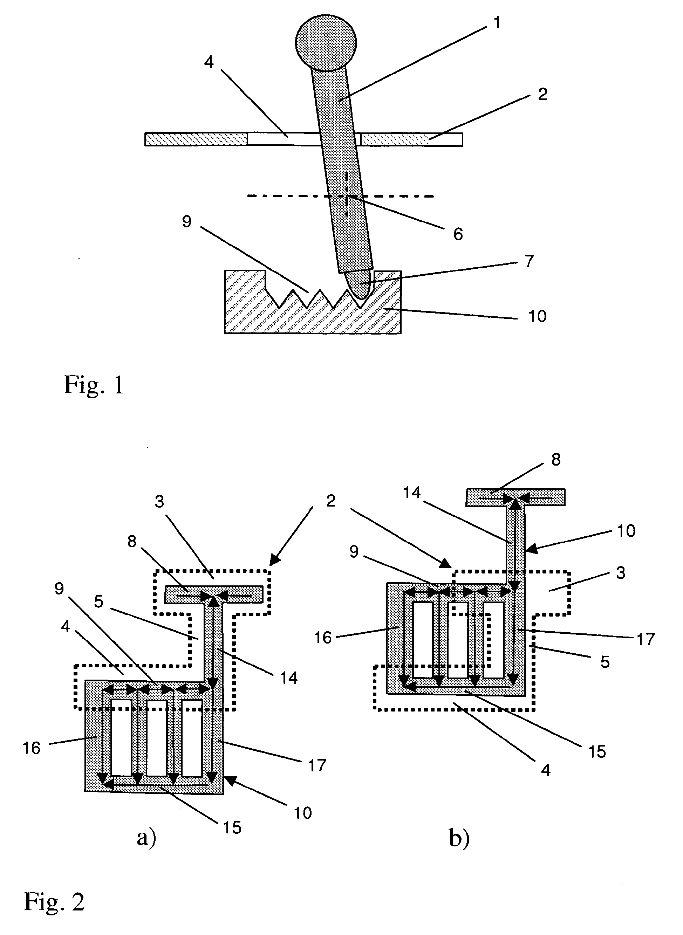

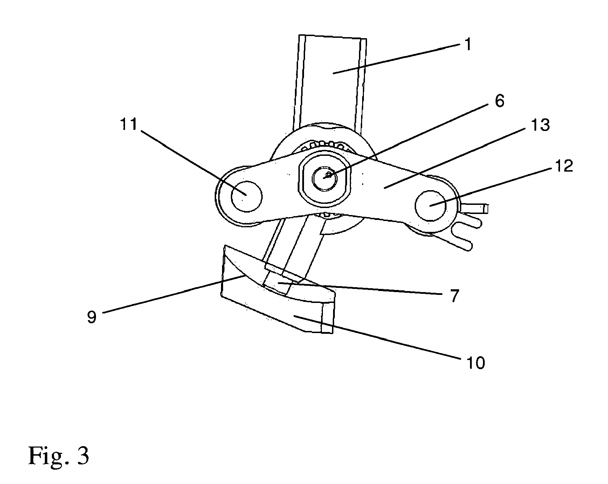

Wie in Fig. 1 und 2 zu sehen, ist der Schalthebel 1 der elektrischen Schalteinrichtung in einer Schaltbegrenzungskulisse 2 geführt. Durch die Schaltbegrenzungskulisse 2 ist die Bewegung des Schalthebels 1 auf zwei parallel zueinander verlaufende Schaltgassen 3, 4 sowie einen diese verbindenden und senkrecht zu deren Verlauf ausgerichteten Verbindungskanal 5 begrenzt. Zum Wechsel zwischen den beiden Schaltgassen 3, 4 wird der Schalthebel 1 längs des Verbindungskanals 5 verstellt. Um die Verstellbarkeit des Schalthebels 1 in der Schaltbegrenzungskulisse 2 zu ermöglichen, ist dieser in Richtung des Verbindungskanals 5 parallel verschiebbar und um eine parallel zu dem Verbindungskanal 5 verlaufende Achse 6 drehbar gelagert. Die Lagerung des Schalthebels 1 umfasst, wie in Fig. 3 gezeigt, eine Linearlagerung auf zwei parallel zu dem Verbindungskanal 5 ausgerichteten Säulenachsen 11, 12, auf denen der Schalthebel 1 verschiebbar gelagert ist. Die beiden Säulenachsen 11, 12 sind an ihren Enden durch zwei Verbindungsbleche 13 miteinander verbunden, wobei die Verbindungsbleche 13 etwa in ihrer Mitte wiederum selbst auf einer weiteren, zu den Säulenachsen 11, 12 parallel ausgerichteten Achse 6 gelagert und um diese Achse 6 drehbar sind. Der Schalthebel 1 ist dadurch entlang des Verbindungskanals 5 verschiebbar und innerhalb der Schaltgassen 3, 4 verschwenkbar gelagert.

Der Schalthebel 1 ist mit einer in der Zeichnung nicht dargestellten elektrischen oder elektronischen Schaltpositionserfassungseinrichtung verbunden, durch die die jeweils eingenommene Schaltposition und damit der jeweilige Schaltwunsch des Fahrers elektrisch oder elektronisch erfasst wird. Es kann sich hierbei z.B. um elektromechanische Kontakte oder auch um berührungslos arbeitende Schaltpositionserfassungseinrichtungen etwa auf der Basis von magnetfeldempfindlichen oder optischen Sensoren handeln. Der dem Schaltwunsch entsprechende eigentliche Schaltvorgang wird dann in einem automatisierten Schaltgetriebe elektrohydraulisch oder elektromotorisch vorgenommen.

Zur Realisierung rastender und tastender Schaltstellungen des Schalthebels 1 ist dieser an seinem unteren Ende mit einer Rasteinrichtung verbunden. Diese Rasteinrichtung umfasst, wie in Fig. 1 und 2 schematisch gezeigt, einen federbelasteten Raststößel 7 sowie eine mit diesem kooperierende Rastkontur 10. Die Rastkontur 10 weist dabei drei parallel zueinander verlaufende Rastkurvenbahnen 8, 9 und 15 auf. Die beiden Rastkurvenbahnen 8, 9 sind durch eine quer zu diesen verlaufende Verbindungsbahn 14 miteinander verbunden, und die Rastkurvenbahn 15 ist mit der Rastkurvenbahn 9 an ihren vorderen und hinteren Enden durch weitere Verbindungsbahnen 16, 17 verbunden.

Die gesamte Rastkontur 10 ist mit einem in der Zeichnung nicht dargestellten Aktuator verbunden, durch den sie in ihrer Gesamtheit parallel zu dem die Schaltgassen 3, 4 verbindenden Verbindungskanal 5 verstellt werden kann. Als Aktuator kann hierbei beispielsweise ein Elektromotor oder ein Hubmagnet eingesetzt werden.

In der Grundstellung der Schalteinrichtung ist die Rastkontur 10 bezüglich der Schaltbegrenzungskulisse 2 so ausgerichtet, dass die Rastkurvenbahnen 8, 9 unterhalb der ersten und zweiten Schaltgassen 3, 4 liegen, so dass der Schalthebel 1 innerhalb dieser Schaltgassen 3, 4 bewegbar ist und dort die durch die Rastkurvenbahnen 8, 9 definierten rastenden oder tastenden Schaltstellungen einnehmen kann.

Diese Situation ist schematisch durch die Fig. 2a verdeutlicht, wobei die durchgezogenen Linien die Rastkontur 10 darstellen und die gestrichelte Linie die darüberliegende Schaltbegrenzungskulisse 2 darstellt. Die Pfeile geben die Richtung der jeweils auf den Schalthebel 1 einwirkenden Rückstellkraft an der jeweiligen Position an. In der ersten Schaltgasse 3 ist der Schalthebel 1 nur tastend nach vorne und nach hinten bewegbar und fällt immer wieder in die Mittenstellung zwischen diesen Richtungen zurück. Dies dient bei einem Gangwahlhebel etwa einem manuellen Gangwechsel auf und ab. Längs der Verbindungsbahn 5 ist der Schalthebel 1 rastend in die rückseitige Endstellung der zweiten Schaltgasse 4 bzw. der darunterliegenden Rastkurvenbahn 9 verstellbar. Bei einem Gangwahlhebel entspricht diese Stellung der normalen Fahrstellung "D". Längs dieser Rastkurvenbahn 9 kann der Schalthebel 1 dann in drei weitere Schaltstellungen, also etwa die Stellungen für Neutral, Rückwärts und Parken gebracht werden, in denen er jeweils einrastet. In seiner vorderen Stellung innerhalb der zweiten Schaltgasse 4 befindet sich der Schalthebel 1 in der sogenannten Parkposition, in der ein Fahrzeug abgestellt wird. Ein Wechsel der Schaltstellung in dieser Schaltgasse 4 erfordert also jeweils eine nach vorwärts oder rückwärts gerichtete Betätigung des Schalthebels 1.

Zur Rückstellung des Schalthebels 1 aus einer beliebigen Stellung in diese Grundstellung oder Parkposition wird die Rastkontur 10 durch einen Aktuator, wie beispielsweise einen Elektromotor relativ zu der Schaltbegrenzungskulisse 2 verschoben. Die Verschiebung der Rastkontur 10 gegenüber der Schaltbegrenzungskulisse erfolgt dabei in dem hier gezeigten Beispiel quer, insbesondere senkrecht zum Verlauf der Schaltgassen 3, 4, und zwar so, dass diese zueinander eine wie in Fig. 2b gezeigte Position einnehmen. Durch die auf den Schalthebel 1 einwirkenden Rückstellkräfte wird dieser aus jeder beliebigen Position in die vordere Stellung innerhalb der zweiten Schaltgasse 4 verstellt, so dass er sich in der Parkposition befindet. Diese Verstellung kann beispielsweise beim Abstellen des Motors oder beim Abziehen des Zündschlüssels automatisch erfolgen.

## Patentansprüche

1. Elektrische Schalteinrichtung für ein Kraftfahrzeug, mit einem Schalthebel (1) und mit einer zumindest eine erste Schaltgasse (4) aufweisenden Schaltbegrenzungskulisse (2), wobei der Schalthebel (1) um eine senkrecht zu der Schaltgasse (4) verlaufende Achse (6) drehbar gelagert und in der Schaltgasse (4) in verschiedene Schaltstellungen bringbar ist, wobei das untere Ende des Schalthebels (1) mit einer einen federbelasteten Raststößel (7) sowie eine mit diesem kooperierende, mit einer parallel zueinander verlaufende erste und zweite Rastkurvenbahnen (9, 15) aufweisenden Rastkontur (10) umfassenden Rasteinrichtung verbunden ist, wobei durch die erste Rastkurvenbahn (9) rastende und/oder tastende Schaltstellungen des Schalthebels (1) definiert sind, **dadurch gekennzeichnet, dass** die Rastkontur (10) insgesamt durch einen Aktuator quer zu der Schaltgasse (4) verschiebbar ist.

2. Elektrische Schalteinrichtung nach Anspruch 1, **dadurch gekennzeichnet, dass** die zweite Rastkurvenbahn (15) einen den Schalthebel (1) zwangsweise in eine Grundstellung überführenden Verlauf hat.

3. Elektrische Schalteinrichtung nach Anspruch 1, **dadurch gekennzeichnet, dass** die zweite Rastkurvenbahn (15) einen den Schalthebel (1) in einer Schaltposition sperrenden Verlauf hat.

4. Elektrische Schalteinrichtung nach einem der Ansprüche 1 bis 3, **dadurch gekennzeichnet, dass** in der Schaltbegrenzungskulisse (2) eine parallel zu der ersten Schaltgasse (4) verlaufende zweite Schaltgasse (3) sowie ein senkrecht zum Verlauf der Schaltgassen (3, 4) ausgerichteter Verbindungskanal (5) vorhanden sind, und dass die Rastkontur (10) eine parallel zu den ersten und zweiten Rastkurvenbahnen (9, 15) verlaufende weitere Rastkurvenbahn (8) aufweist, durch welche rastende und/oder tastende Schaltstellungen des Schalthebels (1) definiert sind.

5. Elektrische Schalteinrichtung nach Anspruch 4, **dadurch gekennzeichnet, dass** der Schalthebel (1) in Richtung des Verbindungskanals (5) verschiebbar gelagert ist.

6. Elektrische Schalteinrichtung nach Anspruch 5, **dadurch gekennzeichnet, dass** die Lagerung des Schalthebels (1) in eine Linearlagerung und eine Drehlagerung unterteilt ist.

7. Elektrische Schalteinrichtung nach Anspruch 6, **dadurch gekennzeichnet, dass** die Linearlagerung durch zwei Säulenachsen (11,12) erfolgt, welche gemeinsam um eine weitere Achse (6) drehbar gelagert sind.

8. Elektrische Schalteinrichtung nach einem der Ansprüche 1 bis 7, **dadurch gekennzeichnet, dass** der Schalthebel (1) ein Gangwahlschalter ist.

## Claims

1. Electrical shifting apparatus for a motor vehicle, with a shift lever (1) and with a shift limiting gate (2) having at least one first gate slot (4), with the shift lever (1) supported in a pivotal manner around an axis (6) running perpendicular to the gate slot (4) and capable of being brought into various shift positions in the gate slot (4), with the lower end of the shift lever (1) connected to a detent facility consisting of a spring-loaded detent pin (7) and a detent contour (10) cooperating with the same which has first and second curved detent paths (9, 15) running parallel to each other, with locking and/or non-locking shift positions of the shift lever (1) defined by the first curved detent path (9), **characterised in that** the detent contour (10) as a whole can be displaced at right angles to the shifting path (4) by means of an actuator.

2. Electrical shifting apparatus in accordance with Claim 1, **characterised in that** the second curved detent path (15) has a course that forcibly transfers the shift lever (1) to a home position.

3. Electrical shifting apparatus in accordance with Claim 1, **characterised in that** the second curved detent path (15) has a course that locks the shift lever (1) in one shift position.

4. Electrical shifting apparatus in accordance with any of Claims 1 to 3, **characterised in that** in the shift limiting gate (2) there is a second gate slot (3) running parallel to the first gate slot (4) as well as a connecting channel (5) aligned perpendicular to the course of the gate slots (3, 4) and that the detent contour (10) features a further curved detent path (8) running parallel to the first and second curved detent paths (9, 15) by means of which locking and/or non-locking shift positions of the shift lever (1) are defined.

5. Electrical shifting apparatus in accordance with Claim 4, **characterised in that** the shift lever (1) is mounted so as to be displaceable in the direction of the connecting channel (5).

6. Electrical shifting apparatus in accordance with Claim 5, **characterised in that** the bearing assembly of the shift lever (1) is divided into a linear bearing and a pivot bearing.

7. Electrical shifting apparatus in accordance with Claim 6, **characterised in that** the linear bearing constitutes two pillar axes (11,12) which together are pivot mounted around a further axis (6).

8. Electrical shifting apparatus in accordance with any of Claims 1 to 7, **characterised in that** the shift lever (1) is a gear selector.

## Revendications

1. Dispositif de commutation électrique pour un véhicule automobile, avec un levier de commutation (1) et avec une coulisse de contrôle de la commutation (2), présentant au moins un premier parcours de commutation (4), le levier de commutation (1) étant monté à rotation autour d'un axe (6), qui s'étend perpendiculairement au parcours de commutation (4), et qui peut être amené dans différentes positions de commutation dans le parcours de commutation (4), l'extrémité inférieure du levier de commutation (1) étant reliée à un dispositif d'encliquetage, comprenant un poussoir (7) commandé par ressort, ainsi qu'un contour d'encliquetage (10), qui, coopérant avec celui-ci, présente une première et une deuxième voies d'encliquetage (9, 15), parallèles l'une à l'autre, des positions de commutation du levier de commutation (1) verrouillées et / ou non verrouillées étant définies par la première voie d'encliquetage (9), **caractérisé en ce que** le contour d'encliquetage (10) peut être déplacé en bloc par un actuateur, transversalement par rapport au parcours de commutation (4).

2. Dispositif de commutation électrique selon la revendication 1, **caractérisé en ce que** la deuxième voie d'encliquetage (15) présente un tracé, qui ramène de force le levier de commutation (1) dans une position de base.

3. Dispositif de commutation électrique selon la revendication 1, **caractérisé en ce que** la deuxième voie d'encliquetage (15) présente un tracé qui bloque le levier de commutation (1) dans une position de commutation.

4. Dispositif de commutation électrique selon l'une des revendications 1 à 3, **caractérisé en ce que**, dans la coulisse de limitation de la commutation (2) sont prévues un deuxième parcours de commutation (3), qui s'étend parallèlement au premier parcours de commutation (4), ainsi qu'un canal de liaison (5), qui est orienté perpendiculairement au tracé des parcours de commutation (3, 4), et **en ce que** le contour d'encliquetage (10) présente une autre voie d'encliquetage (8), qui s'étend parallèlement à la première et à la deuxième voies d'encliquetage (9, 15), par laquelle sont définies des positions de commutation verrouillées et / ou non verrouillées du levier de commutation (1).

5. Dispositif de commutation électrique selon la revendication 4, **caractérisé en ce que** le levier de commutation (1) est monté mobile en direction du canal de liaison (5).

6. Dispositif de commutation électrique selon la revendication 5, **caractérisé en ce que** le montage du levier de commutation (1) est divisé en un montage de translation et un montage de pivotement.

7. Dispositif de commutation électrique selon la revendication 6, **caractérisé en ce que** le montage de translation est effectué par deux axes en forme de colonnes (11, 12), qui, en commun, sont montés à rotation autour d'un autre axe (6).

8. Dispositif de commutation électrique selon l'une des revendications 1 à 7, **caractérisé en ce que** le levier de commutation (1) est un sélecteur de vitesses.
